# EUROPEAN PATENT SPECIFICATION

(11) **EP 2 448 873 B1**
(45) Date of publication and mention of the grant of the patent: **18.01.2017**
(21) Application number: 10794434.0
(22) Date of filing: 23.06.2010
(51) Int. Cl.: C02F 9/10, A01J 11/16, C02F 1/02

(54) **A METHOD AND AN APPARATUS FOR CONTINUOUSLY STERALIZING WATER FOR SPRAYING THE PISTONS IN A PISTON PUMP OR A HOMOGENIZER**
VERFAHREN UND VORRICHTUNG ZUR KONTINUIERLICHEN STERILISATION VON WASSER ZUR BESPRÜHUNG DER KOLBEN IN EINER KOLBENPUMPE ODER EINEM HOMOGENISATOR
PROCÉDÉ ET APPAREIL POUR STÉRILISER EN CONTINU DE L'EAU POUR PULVÉRISER LES PISTONS DANS UNE POMPE À PISTON OU UN HOMOGÉNÉISATEUR

(30) Priority: 02.07.2009 SE 0900901
(43) Date of publication of application: 09.05.2012
(73) Proprietor: Tetra Laval Holdings & Finance S.A., 1009 Pully (CH)
(72) Inventor: JOHANSSON, Fredrik, S-227 32 Lund (SE)
(74) Representative: Fredriksson, Anders
(86) International application number: PCT/SE2010/000173
(87) International publication number: WO 2011/002376

(56) References cited:
- EP-A2- 1 875 818
- WO-A1-2006/037868
- WO-A1-2009/146504
- JP-A- 2003 175 384
- JP-A- 2008 110 276
- US-A- 3 180 273
- US-A1- 2007 221 362
- US-A1- 2008 107 561

## Description

### TECHNICAL FIELD

The present invention relates to a method for pumping using a piston pump or homogenizing using a homogenizer and a homogenizer or piston pump comprising an apparatus for sterilizing water for spraying the pistons in a piston pump or a homogenizer.

### BACKGROUND ART

Piston pumps are used int. al. for homogenizers, where they generate the enormous pressure which is required for the homogenization process. Homogenization entails that the product, such as for example milk, which is to be homogenized is forced at high pressure through a narrow gap and the fat globules which exist in the product are atomised after the passage through the gap.

Those homogenizers which are used for foods such as dairy produce are provided with double piston seals. This is to ensure that product and surrounding air do not come into contact with one another. In order to cool and lubricate these seals, they are sprayed constantly with water or some other liquid, which implies a not inconsiderable consumption of the spraying liquid.

In those cases when the homogenizer in a plant is positioned after the sterilizer in an aseptic process, the liquid, such as water, must moreover be sterile and not below a certain temperature in order to avoid re-infection of the product.

Available on the market today, there are a number of different methods for obtaining sterile water or other liquid for spraying of the pistons. The commonest method is to condense steam, which implies considerable steam consumption and consumption of cooling water for the condensation. In such instance, the common practice is to spray with a condensate which is at 110°C, which implies that piston seals must be used which withstand this temperature. The high temperatures restrict the possible choice of materials for the piston seals.

Another method is to cool steam with cooling water to a temperature of 40-60°C. This method implies further consumption of water. The advantage inherent in a lower temperature of the condensate is that it is possible to use other materials for the piston seals. These materials mean that a longer service life will be obtained for the piston seals.

A third method of sterilizing water for piston pumps and homogenizers is described in European Patent Specification EP 1 875 818. According to this method, the water is filtered so that it becomes sterile. This method implies a reduced consumption of steam and cooling water, but it does involve major investment costs.

### OBJECTS OF THE INVENTION

One object of the present invention is to realise a method and an apparatus for sterilizing water for spraying the pistons, which reduces both steam consumption and the consumption of cooling water.

A further object of the present invention is to realise a method and an apparatus which does not involve major investment costs.

### SOLUTION

These and other objects have been attained according to the present invention in that the method of the type described by way of introduction has been given the characterising features that the heating of the water takes place regeneratively in a first stage, thereafter in a second stage with steam, and that the water is held at a temperature of at least 121°C during a predetermined period of time, whereafter the water is cooled regeneratively to a temperature exceeding 75° C, and below 110°C, enabling the use of a piston seal material withstanding temperatures below 110°C.

These and other objects have further been attained according to the present invention in that the apparatus of the type described by way of introduction has been given the characterising features that the apparatus comprises two heat exchangers, the first being disposed for regeneratively heating the incoming water in a first stage, and cooling the sterile water to a temperature exceeding 75°C, and below 110°C, enabling the use of a piston seal material withstanding temperatures below 110°C, and that the second heat exchanger is disposed, in a second stage, to heat the water to a temperature of at least 121 °C, the apparatus also including conduits, a holder cell and requisite valves as well as pressure and temperature gauges.

Preferred embodiments of the present invention have further been given the characterising features as set forth in the appended subclaims.

### BRIEF DESCRIPTION OF THE ACCOMPANYING DRAWING

One preferred embodiment of the present invention will now be described in greater detail hereinbelow, with reference to the accompanying Drawing. In the accompanying Drawing:

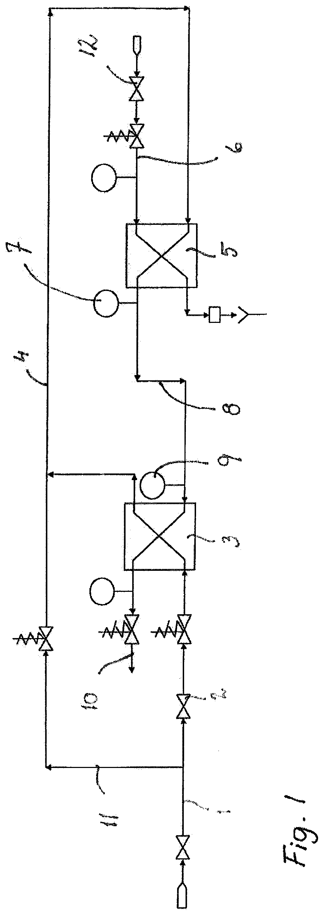

Fig. 1 describes a flow diagram for the apparatus according to the present invention and carrying the method into effect.

The Drawing shows only those parts and details essential to an understanding of the present invention, and the connection of the apparatus according to the invention to, for example, a homogenizer, has been omitted.

### DESCRIPTION OF PREFERRED EMBODIMENT

Fig. 1 shows a flow diagram for the method and the apparatus according to the present invention. Cold water which is to be sterilized enters into the apparatus through the conduit 1. Via a shut-off valve 2, the water arrives at a first heat exchanger 3. The heat exchanger 3 is preferably a plate heat exchanger, but other types of heat exchangers may also occur.

In the heat exchanger 3, a part of the cold water is heated regeneratively by water which has already been heated up. The second part of the cold water is led past the first heat exchanger 3 via the conduit 11. The cold water flow is divided up in order not to obtain excessively large regenerative cooling effect on the ready-heated water which passes the first heat exchanger 3 on its way to spraying the pistons.

The water heated up in the first stage departs from the heat exchanger 3 through the conduit 4 and is converged with the cold water flow from the conduit 11. In the conduit 4, the water is led further to a second heat exchanger 5. The heat exchanger 5 is preferably a plate heat exchanger, but other types of heat exchangers may also occur.

In the second heat exchanger 5, the water is heated in a second stage with steam. Other heating forms are also possible. The steam enters the heat exchanger 5 through the conduit 6. In the second heat exchanger 5, the water is heated to at least 121 °C. That the water has achieved the correct temperature is monitored by means of the temperature gauge 7. Since the water into the second heat exchanger 5 is already heated in a first stage in the first heat exchanger 3, the steam consumption in the second heat exchanger 5 is reduced.

Immediately after the heat exchanger 5, the heated water is led to a holding cell 8. The holding cell 8 may be designed as a helical conduit, or alternatively consist of a straight conduit section. In the holding cell 8, the heated water, at a temperature of at least 121°C, is allowed to stay for a predetermined period of time. The higher the temperature the water has at a specific flow, the shorter will be the time the water needs to stay in the holding cell 8.

That the water departing from the holding cell 8 maintains a temperature of at least 121°c is monitored by the temperature gauge 9. The heated, now sterile water is thereafter led into the first heat exchanger 3, where it is caused to regeneratively heat that part of the cold water entering into the apparatus which passes the first heat exchanger 3. If all of the cold water were to pass the first heat exchanger 3, there would, granted, be a greater energy saving, but there is simultaneously the risk of obtaining an excessively great regenerative cooling effect on the sterile water.

After the heated water departs from the first heat exchanger 3, it is at a temperature of at least 75 °C, and below 110°C.

It is this sterile water which is conveyed in the conduit 10 to the piston pump or the homogenizer, and thereby constitutes the water for the continuous spraying of the pistons. The conduit 10 is in the direct vicinity of the piston pump or the homogenizer, so that the sterile water can spray the pistons at a temperature of at least 75°C without risk of loosing the temperature.

Since the water for the spraying of the pistons is at a temperature of at least 75°C, it exceeds the pasteurization temperature and the risk of re-infection is reduced. At the same time, there will be obtained a temperature which is lower than the temperature obtained in the previously described prior art method which involves the condensation of steam. As a result of the lower temperature, it is possible to use piston seal material with several times longer service life, at the same time as consumption of steam and water will be substantially reduced. Compared with the method of condensating steam, the water consumption involved in the method according to the present invention will be approx. 75% lower and the steam consumption will be approx. 50% lower.

The apparatus and the method of sterilizing water for spraying the pistons in a piston pump or a homogenizer also makes possible sterilization of the piston space between the piston seals in connection with the remaining sterilization of the equipment on production start-up. The cold water entering into the conduit 1 is then caused to pass the conduit 11 since the shut-off valve 2 is kept closed. The cold water is thereafter led further in the conduit 4 to the second heat exchanger 5.

In the second heat exchanger 5, the water is heated to at least 121°C and is allowed to remain in the holding cell at this temperature for a predetermined period of time. The hot water is then caused to pass the first heat exchanger 3 without any cooling medium being in the heat exchanger 3. Thus, the water is still at a temperature of at least 121°C when it is led in the conduit 10 to the piston pump or the homogenizer and an efficient sterilization of the space between the piston seals will thereby be obtained.

The apparatus and the method according to the present invention may also be used during a main wash, i.e. when the plant of which the homogenizer constitutes a part is cleaned. A valve 12 on the conduit 6 for the supply of steam is closed and no steam then arrives at the second heat exchanger 5. Cold water from the conduit 1 passes through the entire apparatus. Thereby, a further reduction of the steam consumption will be obtained and the thermal loading on the piston seals is reduced.

As will have been apparent from the foregoing description, the present invention realises a method and an apparatus for continuously sterilizing the water which is used for spraying the pistons in a piston pump or a homogenizer. As a result of the method, there will be obtained a substantially reduced consumption of steam and water compared with prior art methods. Nor does the apparatus for carrying the method into effect imply any major investment costs.

## Claims

1. A method for pumping using a piston pump or homogenizing using a homogenizer, said method comprising a step of sterilizing water for continuously spraying pistons in a piston pump or a homogenizer, **characterized in that** heating of the water takes places regeneratively in a first stage, thereafter in a second stage with steam, and that the water is held at a temperature of at least 121°C during a predetermined period of time, whereafter the water is cooled regeneratively to a temperature which exceeds 75°C and is below 110°C, enabling use of a piston seal material withstanding temperatures below 110°C.

2. A homogenizer or piston pump comprising an apparatus for sterilizing water for continuously spraying pistons in the piston pump or the homogenizer, **characterized in that** the apparatus comprises two heat exchangers (3,5) of which the first (3) is disposed for regeneratively heating incoming water in a first stage and cooling the sterile water to a temperature which exceeds 75°C and is below 110°C, enabling use of a piston seal material withstanding temperatures below 110°C, and that the second heat exchanger (5) is disposed, in a second stage, to heat the water to a temperature of at least 121°C, the apparatus also including conduits (1,4,6,11), a holding cell (8) and requisite valves (2,12) as well as pressure and temperature gauges (7,9).

## Patentansprüche

1. Verfahren zum Pumpen unter Verwendung einer Kolbenpumpe oder Homogenisieren unter Verwendung eines Homogenisators, wobei das Verfahren einen Schritt des Sterilisierens von Wasser zum kontinuierlichen Besprühen von Kolben in einer Kolbenpumpe oder einem Homogenisator umfasst, **dadurch gekennzeichnet, dass** Erhitzen des Wasser in einer ersten Stufe regenerativ erfolgt, anschließend in einer zweiten Stufe mit Dampf, und dass das Wasser während eines vorbestimmten Zeitraums bei wenigstens 121 °C gehalten wird, wonach das Wasser regenerativ auf eine Temperatur abgekühlt wird, die höher als 75 °C und niedriger als 110 °C ist, um die Verwendung eines Kolbendichtungsmaterials zu erlauben, das gegen Temperaturen von unter 110 °C beständig ist.

2. Homogenisator oder Kolbenpumpe, umfassend eine Vorrichtung zum Sterilisieren von Wasser zum kontinuierlichen Besprühen von Kolben in der Kolbenpumpe oder dem Homogenisator, **dadurch gekennzeichnet, dass** die Vorrichtung zwei Wärmetauscher (3, 5) umfasst, von denen der erste (3) zum regenerativen Erhitzen von eintretendem Wasser in einer ersten Stufe und Kühlen des sterilen Wassers auf eine Temperatur, die höher als 75 °C und niedriger als 110 °C ist, um die Verwendung eines Kolbendichtungsmaterials zu erlauben, das gegen Temperaturen von unter 110 °C beständig ist, angeordnet ist, und dass der zweite Wärmetauscher (5) in einer zweiten Stufe angeordnet ist, um das Wasser auf eine Temperatur von wenigstens 121 °C zu erhitzen, wobei die Vorrichtung auch Leitungen (1, 4, 6, 11), eine Haltezelle (8) und erforderliche Ventile (2, 12) sowie Druck- und Temperaturmesser (7, 9), aufweist.

## Revendications

1. Procédé de pompage au moyen d'une pompe à piston ou d'homogénéisation au moyen d'un homogénéisateur, ledit procédé comprenant une étape consistant à stériliser de l'eau destinée à être pulvérisée de façon continue sur des pistons dans une pompe à piston ou un homogénéisateur, **caractérisé en ce qu'**un chauffage de l'eau a lieu de manière régénérative dans un premier étage, puis dans un second étage avec de la vapeur, et **en ce que** l'eau est maintenue à une température d'au moins 121 °C pendant une période prédéterminée, après quoi l'eau est refroidie de manière régénérative à une température qui est supérieure à 75 °C et est inférieure à 110 °C, ceci permettant l'utilisation d'un matériau d'étanchéité de piston résistant à des températures inférieures à 110 °C.

2. Homogénéisateur ou pompe à piston comprenant un appareil servant à stériliser de l'eau destinée à être pulvérisée de façon continue sur des pistons dans la pompe à piston ou l'homogénéisateur, caractérisé(e) en ce que l'appareil comprend deux échangeurs thermiques (3, 5) parmi lesquels le premier (3) est disposé de façon à chauffer de manière régénérative de l'eau entrant dans un premier étage et à refroidir l'eau stérile à une température qui est supérieure à 75 °C et est inférieure à 110 °C, ceci permettant l'utilisation d'un matériau d'étanchéité de piston résistant à des températures inférieures à 110 °C, et en ce que le second échangeur thermique (5) est disposé, dans un second étage, de façon à chauffer l'eau à une température d'au moins 121 °C, l'appareil comprenant également des conduits (1, 4, 6, 11), un compartiment de stockage (8) et les valves requises (2, 12) ainsi que des jauges de pression et de température (7, 9).
